# EUROPÄISCHE PATENTSCHRIFT

(11) **EP 2 098 670 B1**
(45) Veröffentlichungstag und Bekanntmachung des Hinweises auf die Patenterteilung: **02.11.2011**
(21) Anmeldenummer: 08102248.5
(22) Anmeldetag: 04.03.2008
(51) Int. Cl.: E05F 15/20, B60R 25/00, G07C 9/00

(54) **Kraftfahrzeug mit einem automatisch in eine Offen- und eine Schließstellung verstellbaren Fahrzeugteil**
Motor vehicle with a vehicle component which can automatically be adjusted to an open or closed position
Véhicule automobile doté d'une pièce de véhicule réglable automatiquement en position ouverte ou fermée

(43) Veröffentlichungstag der Anmeldung: 09.09.2009
(73) Patentinhaber: Hella KGaA Hueck & Co., 59552 Lippstadt (DE)
(72) Erfinder: Weghaus, Ludger, 59556, Lippstadt (DE); Reimann, Martin, 59071, Hamm (DE)

(56) Entgegenhaltungen:
- EP-A- 1 733 937
- DE-A1- 19 901 364
- DE-A1-102005 042 402
- DE-B3-102004 041 709
- DE-U1-202005 020 140

## Beschreibung

Die Erfindung betrifft ein Kraftfahrzeug nach dem Oberbegriff von Anspruch 1 und ein Verfahren nach dem Oberbegriff von Anspruch 9.

Ein derartiges Kraftfahrzeug gemäß den Merkmalen des Oberbegriffs des Anspruchs 1 ist aus DE 20 2005 020 140 U1 bekannt. Es weist als erstes Fahrzeugteil eine Heckklappe und als zweites Fahrzeugteil eine Fahrzeugtüre auf, die jeweils in eine Offen- und eine Schließstellung verstellbar sind. Zum Verstellen der Heckklappe in die Offen- und/oder Schließstellung hat das Kraftfahrzeug eine Betätigungseinrichtung mit einem Antrieb. Außerdem ist eine Ent-/Verriege!ungseinrichtung für die Fahrzeugteile vorgesehen. Im unteren Bereich hat das Kraftfahrzeug einen Näherungssensor, der einen Teil eines Außenbereichs des Kraftfahrzeugs auf die Anwesenheit eines Körperteils eines Benutzers überwacht. Außerdem weist das Kraftfahrzeug ein vom seinem Benutzer mitführbares Zugangsberechtigungsmittel und eine Detektionseinrichtung auf, mittels der das Vorhandensein des Zugangsberechtigungsmittels berührungslos in einem ersten Umgebungsbereich der Detektionseinrichtung und einem kleineren zweiten Umgebungsbereich der Detektionseinrichtung detektierbar ist. Mit dem Näherungssensor, der Detektionseinrichtung, der Betätigungseinrichtung und der Ent-/Vemegetungseinrichtung ist eine Steuereinrichtung verbunden, die derart ausgestaltet ist, dass ein Freigabesignal für das Entriegeln der Ent-/Verriegeiungseinrichtung erzeugt wird, wenn die Detektionseinrichtung das Vorhandensein des Zugangsberechtigungsmittels in dem ersten Umgebungsbereich detektiert, und dass ein das Verstellen des ersten Fahrzeugsteils auslösendes Betätigungssteuersignal erzeugt wird, wenn der Näherungssensor die Anwesenheit des Körperteils in dem Teil des Außenbereichs und die Detektionseinrichtung das Vorhandensein des Zugangsberechtigungsmittels in dem kleineren zweiten Umgebungsbereich detektieren.

Bei einem aus DE 10 2005 042 402 A1 bekannten Kraftfahrzeug wird das automatische Öffnen einer Heckklappe durch ein Steuersignal ausgelöst, das erzeugt wird, wenn sich ein vom Benutzer des Kraftfahrzeugs mitführbares Zugangsberechtigungsmittel in einem Umgebungsbereich einer im Kraftfahrzeug angeordneten Detektionseinrichtung befindet und ein Körperteil des Benutzers einen Mindestabstand zu einem Näherungssensor unterschreitet.

Bei einem aus EP 1 733 937 A1 bekannten Kraftfahrzeug wird um eine Heckklappe herum ein elektrischer Feldstärkebereich erzeugt. Die Heckklappe wird automatisch geöffnet, wenn sich ein tragbares Zugangsberechtigungsmittel in dem Feldstärkebereich befindet, und das Zugangsberechtigungsmittel eine zum automatischen Öffnen der Heckklappe berechtigende Positionsänderung durchführt oder für eine vorgebbare Zeitdauer in dem Feldstärkebereich verweilt, ohne seine Position zu verändern. Dabei wird die Positionsänderung oder das Unverändern der Position des Zugangsberechtigungsmittels durch eine Sende-/Empfangseinheit detektiert.

Aus DE 199 01 364 A1 ist ein Kraftfahrzeug bekannt, das ein von seinem Benutzer mitführbares Zugangsberechtigungsmittel aufweist. Mit dem Zugangsberechtigungsmittel wirkt eine Steuereinrichtung für ein Türschließsystem zusammen. Die Steuereinrichtung weist zwei Zustände auf, nämlich "Autotüre verriegelt" und "Autotüre entriegelt"**.** Mit der Steuereinrichtung stehen erste Sende-/Empfangsmittel in Verbindung und das Zugangsberechtigungsmittel weist zweite Sende-/Empfangsmittel auf. Das erste Sende-/Empfangsmittel sendet ein erstes Betriebssignal aus, das als Wecksignal für eine elektronische Schaltung im Zugangsberechtigungsmittel dient. Nach Empfang des ersten Betriebssignals wird das Zugangsberechtigungsmittel in einen aktivierten Zustand versetzt, in dem weitere Betriebssignale zwischen dem Zugangsberechtigungsmittel und der Steuereinrichtung ausgetauscht werden, wenn sich das Zugangsberechtigungsmittel in einem begrenzten Bereich befindet. Nach positiver Auswertung der weiteren Betriebssignale wird der Zustand der Steuereinrichtung selbsttätig geändert, ohne dass eine manuelle Betätigung durch den Benutzer notwendig ist.

Aus DE 10 2004 041 709 B3 ist ferner ein Kraftfahrzeug bekannt, das mehrere Türen und eine automatisch öffnende Heckklappe hat. Die Türen und die Heckklappe haben einen Ent-/Verriegelungsmechanismus, der mit einem vom Benutzer des Kraftfahrzeugs mitgeführten Zugangsberechtigungsmittel, wie z.B. einen intelligenten Fahrzeugschlüssel oder einer Keycard, zusammenwirkt. Im Kraftfahrzeug ist eine Detektionseinrichtung angeordnet, mit der das Vorhandensein des Zugangsberechtigungsmittels in einem vorbestimmten Umgebungsbereich des Kraftfahrzeugs überprüft werden kann. Der Ent-/Verriegelungsmechanismus und die Detektionseinrichtung wirken derart mit einer Steuereinrichtung zusammen, dass das Entriegeln des Ent-/Verriegelungsmechanismus freigegeben wird, wenn die Detektionseinrichtung die Anwesenheit des Zugangsberechtigungsmittels in dem genannten Umgebungsbereich feststellt. Die Türen und die Heckklappe können dann vom Fahrzeugbenutzer geöffnet werden, ohne dass dieser zuvor die Ent-/Verriegelungsmechanismus manuell entriegeln muss. Bei derartigen, auch als "keyless go", "PEG" (Passive Entry/Go) oder "Hands free" bezeichneten Systemen ist es außerdem üblich, den Ent-/Verriegelungsmechanismus automatisch zu verriegeln, wenn das Zugangsberechtigungsmittel bei geschlossenen Türen und geschlossener Heckklappe aus dem Umgebungsbereich entfernt wird.

Die automatische Heckklappe des Fahrzeugs hat eine Betätigungseinrichtung, mit der sie aufgrund eines Öffnungsbefehls aus ihrer Schließstellung automatisch in die Offenstellung verstellbar ist. Zum Empfangen eines Öffriungswunschs des Fahrzeugbenutzers hat das Kraftfahrzeug einen Näherungssensor, der im Heckbereich des Kraftfahrzeugs unterhalb eines Stoßfängers zwei Sensorelemente aufweist. Diese sind derart angeordnet, dass der Benutzer durch Schwenken des Fußes im Bereich zwischen Fahrzeugaufbau und Fahrbahnoberfläche den Näherungssensor berührungslos zum Schalten veranlassen kann. Der Näherungssensor, die Detektionseinrichtung und die Betätigungseinrichtung stehen derart mit der Steuereinrichtung in Wirkverbindung, dass die Heckklappe automatisch geöffnet wird, wenn der Näherungssensor schaltet und gleichzeitig die Detektionseinrichtung das Vorhandensein des Zugangsberechtigungsmittels in dem erwähnten Umgebungsbereich detektiert. Ein Fahrzeugbenutzer, der aufgrund eines zu tragenden Gegenstands beide Hände belegt hat, kann also mit Hilfe des Näherungssensors den automatischen Öffnungsvorgang der Heckklappe einleiten, ohne den Gegenstand abstellen zu müssen. Das Fahrzeug hat jedoch den Nachteil, dass der Näherungssensor empfindlich gegenüber Störungen ist. So kann es beispielsweise passieren, dass sich die Heckklappe entgegen dem Wunsch des Fahrzeugbenutzers automatisch öffnet, wenn sich das Zugangsberechtigungsmittel in dem erwähnten Umgebungsbereich befindet und sich im Überwachungsbereich des Näherungssensors ein Tier bewegt, welches das Öffnen der Heckklappe auslöst. Auch kann es passieren, dass der Fahrzeugbenutzer die Heckklappe versehentlich selbst öffnet, wenn er beispielsweise das Heck des Fahrzeugs mit einem Hochdruckreiniger absprüht. Derartige Fehlfunktionen werden von den Fahrzeugbenutzern als äußerst störend empfunden.

Es besteht deshalb die Aufgabe ein Kraftfahrzeug und ein Verfahren der eingangs genannten Art zu schaffen, bei denen Fehlfunktionen beim Betätigen des ersten Fahrzeugteils weitestgehend vermieden werden und die ein komfortables, an die individuellen Anforderungen des Kraftfahrzeug-Benutzers anpassbares Öffnen des ersten Fahrzeugteils ermöglichen.

Diese Aufgabe wird bezüglich der Vorrichtung mit den Merkmalen des Anspruchs 1 und bezüglich des Verfahrens mit den Merkmalen des Anspruchs 9 gelöst.

In vorteilhafter Weise wird bei der Überprüfung, ob das erste Fahrzeugteil automatisch geöffnet oder geschlossen werden soll, die Detektionsreichweite des Näherungssensors kleiner gewählt als bei der Überprüfung, ob die Ent-Nerriegelungseinrichtung entriegelt werden soll. Dadurch ist es möglich, den kleineren, zweiten Umgebungsbereich so am Fahrzeug anzuordnen, dass die Wahrscheinlichkeit, dass der Benutzer des Fahrzeugs das erste Fahrzeugteil automatisch öffnen und/oder schließen will, wenn das Zugangsberechtigungsmittel und damit der Benutzer in dem zweiten Umgebungsbereich angeordnet ist, entsprechend hoch ist. So ist es beispielsweise bei einer automatisch betätigbaren Heckklappe möglich, den zweiten Umgebungsbereich so anzuordnen, dass die Heckklappe über den Näherungssensor nur dann automatisch geöffnet oder geschlossen werden kann, wenn der Benutzer des Fahrzeugs dicht an der Heckklappe steht. Dabei kann der zweite Ungebungsbereich beispielsweise einen Radius von maximal 2m, insbesondere 1.5m, 99f. 1m und bevorzugt 0.5m aufweisen. beispielsweise vermieden werden, dass der Benutzer des Kraftfahrzeugs das Öffnen der Heckklappe versehentlich einleitet, wenn er außerhalb des zweiten Umgebungsbereichs stehend, das Heck des Kraftfahrzeugs mit einem Hochdruckreiniger abspritzt und dabei mit der Waschlanze in den von dem Näherungssensor überwachten Außenbereich gerät. Da das Zugangsberechtigungsmittel, die Detektionseinrichtung und die Steuereinrichtung sowohl für das Entriegeln der Fahrzeugteils als auch für das automatische Öffnen des ersten Fahrzeugsteils genutzt werden, können diese Komfortfunktionen einfach und kostengünstig realisiert werden.

Der Benutzer des Kraftfahrzeugs kann erfindungsgemäß die Größe des ersten und/oder zweiten Umgebungsbereichs berührungslos individuell einstellen, indem er ein bestimmtes Bewegungsprofil an den Näherungssensor anlegt. Der jeweils eingestellte Wert wird bevorzugt in einem nichtflüchtigen Speicher abgelegt, damit er auch dann gespeichert bleibt, wenn die Fahrzeugbatterie einmal abgeklemmt oder die Stromversorgung zu der Steuereinrichtung unterbrochen sein sollte.

Bei einer vorteilhaften Ausgestaltung der Erfindung weist die Detektionseinrichtung einen Sender zur Aussendung eines mit dem Zugangsberechtigungsmittel wechselwirkenden elektromagnetischen Wechselfelds auf, wobei die Sendeleistung des Senders verstellbar ist, und wobei der Sender derart mit der Steuereinrichtung in Steuerverbindung steht, dass während der Überprüfung des Vorhandenseins des Zugangsberechtigungsmittels in dem zweiten Umgebungsbereich die Sendeleistung geringer ist als während der Überprüfung des Vorhandenseins des Zugangsberechtigungsmittels in dem ersten Umgebungsbereich. Die für die Ansteuerung des ersten Fahrzeugteils und der Ent-/Verriegelungseinrichtung benötigten Komponenten können dadurch noch einfacher und kostengünstiger bereitgestellt werden. Außerdem kann durch die Reduzierung der Sendeleistung des Senders der elektrische Energieverbrauch des Kraftfahrzeugs reduziert werden. Das Verstellen der Sendeleistung erfolgt bevorzugt in der Weise, dass abwechseln zwischen einer hohen und einer niedrigen Sendeleistung umgeschaltet wird, wenn das Zugangsberechtigungsmittel in dem ersten Umgebungsbereich detektiert wird. Wenn das Zugangsberechtigungsmittel außerhalb des ersten Umgebungsbereichs angeordnet ist, kommt ausschließlich die hohe Sendeleistung zur Anwendung.

Bei einer anderen zweckmäßigen Ausgestaltung der Erfindung weist die Detektionseinrichtung einen ersten Sender zur Aussendung eines mit dem Zugangsberechtigungsmittel wechselwirkenden elektromagnetischen Wechselfelds auf, wobei das Zugangsberechtigungsmittel eine Messeinrichtung zum Messen der Feldstärke des elektromagnetischen Wechselfelds hat, wobei das Zugangsberechtigungsmittel einen zweiten Sender aufweist, der derart ausgestaltet und mit der Messeinrichtung verbunden ist, dass von dem zweiten Sender ein von der Feldstärke abhängiges Funksignal aussendbar ist, und dass die Detektionseinrichtung einen Empfänger für dieses Funksignal aufweist. Das Zugangsberechtigungsmittel ist also als Transponder ausgestaltet, der die Feldstärke des von dem ersten Sender ausgesendeten elektromagnetischen Wechselfelds misst und an drahtlos an die Detektionseinrichtung übermittelt. Mit Hilfe des Messwerts für die Feldstärke kann dann der Abstand zwischen dem Zugangsberechtigungsmittel und dem Empfänger der Detektionseinrichtung ermittelt werden.

Zweckmäßigerweise umfasst der Bewegungsablauf wenigstens eine Schwenkbewegung und/oder mindestens ein Abheben und/oder Senken des Körperteils. Das entsprechende Bewegungsprofil ist dann für den Fahrzeugbenutzer leicht reproduzierbar. Dabei ist es sogar möglich, dass die Steuereinrichtung derart ausgestaltet ist, dass sie mehrere, unterschiedlichen Funktionen zugeordnete Bewegungsprofile detektieren kann, die sich beispielsweise durch die Anzahl, die Richtung und/oder die Geschwindigkeit der Schwenk- bzw. Abhebe-/Senkbewegungen voneinander unterscheiden können.

Bei einer bevorzugten Ausgestaltung der Erfindung weist das Kraftfahrzeug Mittel zum Überwachen der Schließstellung des ersten Fahrzeugteils auf, wobei die Steuereinrichtung derart mit diesen Mitteln und der Betätigungseinrichtung in Steuerverbindung steht, dass das erste Fahrzeugteil geöffnet wird, wenn es sich beim Auftreten des Betätigungssteuersignals in Schließstellung befindet, und wobei das erste Fahrzeugteil geschlossen wird, wenn es sich beim Auftreten des Betätigungssteuersignals nicht in Schließstellung befindet. Das erste Fahrzeugteil kann dann völlig berührungslos betätigt werden.

Bei einer vorteilhaften Ausführungsform der Erfindung weist der Näherungssensor mehrere voneinander beabstandete Sensorelemente auf, mit denen jeweils das Körperteil des Benutzers berührungslos detektierbar ist. Die Steuereinrichtung kann dann derart ausgestaltet sein, dass sie die Richtung, in der das Körperteil in dem zu überwachenden Teil des Außenbereichs des Kraftfahrzeugs relativ zu diesem bewegt wird, anhand des zeitlichen Verläufe der Messsignale der einzelnen Sensorelemente ermitteln kann und das Öffnen und/oder Schließen des ersten Fahrzeugteils nur dann einleitet, wenn die ermittelte Richtung mit einer vorbestimmten Richtung übereinstimmt. Dadurch kann ein unerwünschtes Öffnen und/oder Schließen des ersten Fahrzeugteils noch zuverlässiger vermieden werden.

Bei einer Weiterbildung der Erfindung steht die Steuereinrichtung derart mit mindestens einer Signalleuchte des Kraftfahrzeugs, insbesondere einer oberhalb der Heckklappe angeordneten Bremsleuchte in Steuerverbindung, dass die Signalleuchte beim Auftreten des Betätigungssteuersignals eingeschaltet wird. Der Benutzer des Fahrzeugs bekommt dann eine optische Rückmeldung, sobald die Bedingungen für das Erzeugen des das Verstellen des ersten Fahrzeugsteils auslösenden Betätigungssteuersignals vorliegen. Dabei ist es sogar möglich, dass Verstellen des ersten Fahrzeugsteils nach dem Empfangen des Betätigungssteuersignals erst mit einer vorbestimmten Zeitverzögerung in Ganz zu setzten, um dem Fahrzeugbenutzer ggf. die Möglichkeit zu geben, das Verstellen des ersten Fahrzeugsteils durch erneutes Betätigen des Näherungssensors zu unterdrücken. Die Steuereinrichtung ist bevorzugt derart ausgestaltet, dass die optische Rückmeldung des Betätigungssteuersignals nur bei stehendem Fahrzeug und/oder ausgeschalteter Zündung erfolgt. Die Funktion der Signalleuchte kann dann während der Fahrt durch die Steuereinrichtung nicht gestört werden.

Gegebenfalls ist es sogar möglich, dass die Signalleuchte und/oder eine weitere Signalleuchte derart mit der Steuereinrichtung verbunden ist, dass die Signalleuchte und/oder die weitere Signalleuchte eingeschaltet ist, wenn das Zugangsberechtigungsmittel in dem zweiten Umgebungsbereich detektiert wird. Ein das Zugangsberechtigungsmittel mitführender Fahrzeugbenutzer kann dann auf einfache Weise überprüfen, ob er an der für das berührungslose Auslösen der Verstellbewegung des ersten Fahrzeugsteils vorgesehenen Stelle angeordnet ist und somit die Verstellbewegung beispielsweise durch Positionieren des Fußes in dem von dem Näherungssensor überwachten Außenbereich des Kraftfahrzeugs auslösen kann. Die Einschaltdauer der Signalleuchte kann ggf. mit Hilfe eines Zeitglieds begrenzt werden, wenn das Zugangsberechtigungsmittel längere Zeit in dem zweiten Umgebungsbereich angeordnet ist.

Nachfolgend ist ein Ausführungsbeispiel der Erfindung anhand der Zeichnung näher erläutert. Es zeigt:
- Fig. 1: eine schematische Darstellung eines Kraftfahrzeugs und
- Fig. 2: ein Blockschaltbild.

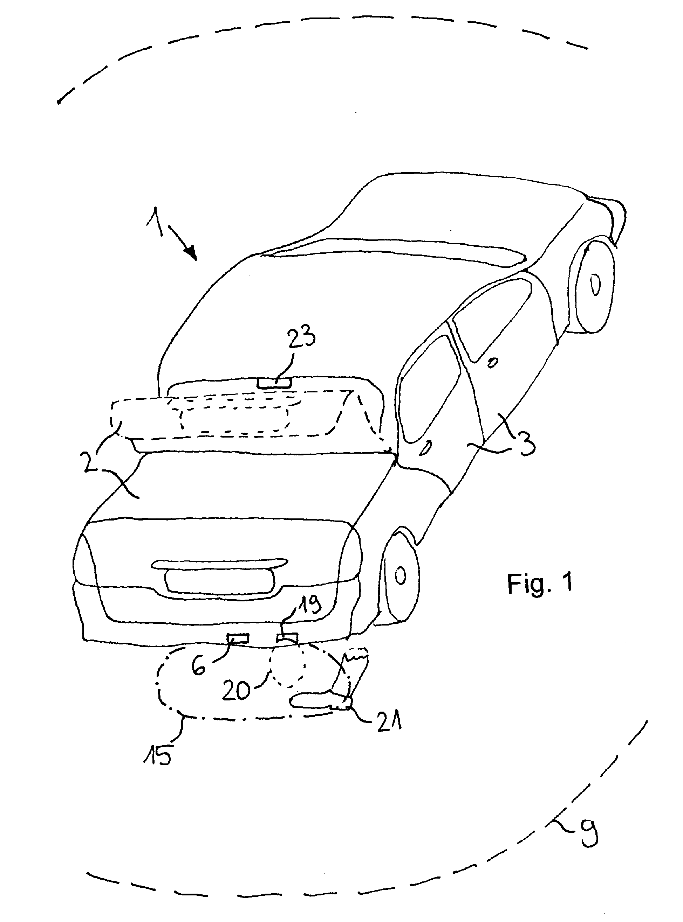

Ein in Fig. 1 im Ganzen mit 1 bezeichnetes Kraftfahrzeug hat ein als Heckklappe ausgestaltetes erstes Fahrzeugteil 2, das zwischen einer Offen- und eine Schließstellung verstellbar ist und einen Zugang zu einem in der Zeichnung nicht näher dargestellten Laderaum ermöglicht. Außerdem weist das Kraftfahrzeug 2 mehrere als Türen ausgestaltete zweite Fahrzeugteile 3 auf, über die der Innenraum des Kraftfahrzeugs 1 zugänglich ist.

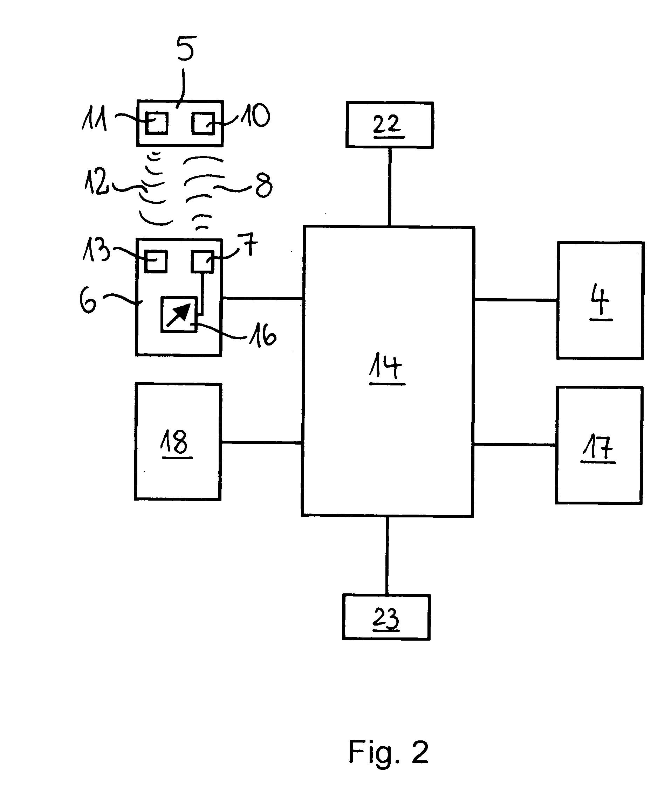

Zum Ver- und Entriegeln der in Schließstellung befindlichen ersten und zweiten Fahrzeugteile 2, 3 hat das Kraftfahrzeug 2 eine in Fig. 2 schematisch dargestellte Ent-/Verriegelungseinrichtung 4. Diese weist für jedes zu verriegelnde bzw. entriegelnde Fahrzeugteil 2, 3 jeweils einen Stellantrieb auf, mit dessen Hilfe in an sich bekannter Weise ein jeweils an dem betreffenden Fahrzeugteil 2, 3 angeordneter Riegel zwischen einer Verriegelungsstellung und einer Offenstellung motorisch verstellbar ist. Mit Hilfe der Ent-Nerriegelungseinrichtung 4 können die Fahrzeugteile 2, 3 zentral ver- bzw. entriegelt werden.

Das Kraftfahrzeug 1 hat mindestens ein Zugangsberechtigungsmittel 5, das vom Benutzer des Kraftfahrzeugs 1 beispielsweise in der Tasche mitgeführt werden kann. Das Zugangsberechtigungsmittel 5 kann zum Beispiel ein Fahrzeugschlüssel oder eine Keycard sein, der bzw. die drahtlos mit einer im Kraftfahrzeug angeordneten Detektionseinrichtung 6 zusammenwirkt.

Die Detektionseinrichtung 6 hat einen ersten Sender 7 zur Aussendung eines ersten elektromagnetischen Wechselfelds 8. Wenn sich das Zugangsberechtigungsmittel 5 innerhalb eines in Fig. 2 strichliniert dargestellten ersten Umgebungsbereichs 9 der Detektionseinrichtung 6 befindet, empfängt ein in dem Zugangsberechtigungsmittel 5 angeordneter erster Empfänger 10 das erste elektromagnetische Wechselfeld 8. Sobald dieses empfangen wird, sendet ein in das Zugangsberechtigungsmittel 5 integrierter zweiter Sender 11 ein zweites elektromagnetisches Wechselfeld 12 aus, das sich bezüglich seiner Frequenz vorzugsweise von der Frequenz des ersten elektromagnetischen Wechselfelds 8 unterscheidet. Das zweite elektromagnetische Wechselfeld 12 wird von einem in der Detektionseinrichtung 6 angeordneten zweiten Empfänger 13 empfangen, worauf hin diese ein Steuersignal erzeugt, welches die Anwesenheit des Zugangsberechtigungsmittels 5 in dem ersten Umgebungsbereich 9 anzeigt. Befindet sich das Zugangsberechtigungsmittel 5 außerhalb des ersten Umgebungsbereichs 9, empfängt der erste Empfänger 10 das erste elektromagnetische Wechselfeld 9 nicht oder mit zu geringer Signalstärke. In diesem Fall sendet der zweite Sender 11 das zweite elektromagnetische Wechselfeld 12 nicht aus.

Wie in Fig. 2 erkennbar ist, ist die Detektionseinrichtung 6 über eine Steuereinrichtung 14 mit der Ent-Nerriegelungseinrichtung 4 verbunden. Wenn die Detektionseinrichtung 6 feststellt, dass das Zugangsberechtigungsmittel 5 in dem ersten Umgebungsbereich 9 vorhanden ist, übermittelt sie das Steuersignal an die Steuereinrichtung 14. Diese erzeugt dann ein Freigabesignal für das Entriegeln der Ent-/Verriegelungseinrichtung 4. In Abhängigkeit von dem Freigabesignal werden die Stellantriebe der Ent-Nerriegelungseinrichtung 4 positioniert. In Fig. 1 ist erkennbar, dass der erste Umgebungsbereich 9 so groß gewählt ist, dass es das erste Fahrzeugteil 2 und alle zweiten Fahrzeugteile 3 umgrenzt.

Mit Hilfe der Detektionseinrichtung 6 kann außerdem überprüft werden, ob das Zugangsberechtigungsmittel 5 in einem in Fig. 1 strichliniert dargestellten zweiten Umgebungsbereich 15 der Detektionseinrichtung 6 angeordnet ist. Der zweite Umgebungsbereich 15 ist kleiner als der erste Umgebungsbereich 9 und entspricht einem dem Kraftfahrzeug 1 zugewandten, inneren Teilbereich des ersten Umgebungsbereichs 9. In Fig. 1 ist erkennbar, dass der zweite Umgebungsbereich 15 dicht an dem ersten Fahrzeugteil 2 angeordnet ist. Die Überprüfung, ob das Zugangsberechtigungsmittel 5 in dem zweiten Umgebungsbereich 15 anwesend ist, erfolgt in entsprechender Weise wie die Überprüfung, ob das Zugangsberechtigungsmittel 5 in dem ersten Umgebungsbereich 9 anwesend ist, wobei jedoch bei der zuerst genannten Überprüfung die Sendeleistung des ersten Senders 7 und/oder des zweiten Senders 11 kleiner gewählt wird als bei der zuletzt genannten Überprüfung. Zu diesem Zweck kann die Detektionseinrichtung 6 eine mit dem ersten Senders 7 verbundene Stelleinrichtung 16 zum Verändern der Sendeleistung des ersten Senders 7 aufweisen.

Das erste Fahrzeugteil 2 kann mit Hilfe einer Betätigungseinrichtung 17 automatisch zwischen der Offenstellung und der Schließstellung verschwenkt werden. Damit der Fahrzeugbenutzer seinen Wunsch, das erste Fahrzeugteil 2 zu öffnen und/oder zu schließen, berührungslos an die Betätigungseinrichtung 17 übermitteln kann, hat das Kraftfahrzeug 1 einen Näherungssensor 18, der im Bereich des hinteren Stoßfängers eine Sensoranordnung 19 mit mehreren Sensorelementen aufweist. Mit Hilfe dieser Sensoranordnung 19 wird ein in Fig. 1 punktiert umrandeter Teil des Außenbereichs 20 des Kraftfahrzeugs 1 auf die Anwesenheit eines Körperteils 21, wie z.B. eines Fußes oder Beins, des Fahrzeugbenutzers überwacht. Durch Einbringen des Körperteils 21 in den überwachten Teil des Außenbereichs 20 kann der Näherungssensor betätigt werden.

Die Steuereinrichtung 14 erzeugt ein das Verstellen des ersten Fahrzeugsteils 2 auslösendes Betätigungssteuersignal, wenn der Näherungssensor 18 die Anwesenheit des Körperteils 21 in dem überwachten Teil des Außenbereichs 20 und die Detektionseinrichtung 6 das Vorhandensein des Zugangsberechtigungsmittels 5 in dem kleineren zweiten Umgebungsbereich 15 detektieren. Das Öffnen und/oder Schließen des ersten Fahrzeugsteils 2 wird also nur dann durch Positionieren des Körperteils 21 in dem Außenbereichs 20 ausgelöst, wenn sich das Zugangsberechtigungsmittel 5 gleichzeitig in dem relativ eng begrenzten, dicht am ersten Fahrzeugsteil 2 angeordneten zweiten Umgebungsbereich 15 befindet. Dadurch wird ein unbeabsichtigtes Auslösen des Öffnungsund/oder Schließvorgangs des zweiten Fahrzeugsteils 3 in der Praxis weitestgehend vermieden.

Der Näherungssensor weist Mittel zum Erkennen von unterschiedlichen Bewegungsabläufen oder Bewegungsprofilen des Körperteils 21 auf. Die Mittel stehen derart mit der Stelleinrichtung 16 in Steuerverbindung, dass beim Detektieren des vorbestimmten Bewegungsablaufs oder Bewegungsprofils die Größe des ersten Umgebungsbereichs und/oder zweiten Umgebungsbereich verändert wird. Dabei ist es beispielsweise denkbar, dass bei einem Schwenken des Körperteils 5 in eine vorbestimmte erste Richtung die Sendeleistung erhöht und damit der betreffende Umgebungsbereich vergrößert wird. In entsprechender Weise kann die Sendeleistung durch Schwenken des Körperteils 5 in eine vorbestimmte zweite Richtung reduziert werden. Das Verändern der Sendeleistung kann ggf. in mehreren Stufen erfolgen.

Zum Überwachen der Schließstellung des ersten Fahrzeugteils 2 ist ein Positionsgeber 22 vorgesehen, der bevorzugt als Schalter ausgestaltet ist. Die Steuereinrichtung steht derart mit dem Positionsgeber 22 und der Betätigungseinrichtung 17 in Steuerverbindung, dass das erste Fahrzeugteil 2 geöffnet wird, wenn es sich beim Auftreten des Betätigungssteuersignals in Schließstellung befindet. Befindet sich das erste Fahrzeugteil 2 beim Auftreten des Betätigungssteuersignals nicht in Schließstellung, wird das erste Fahrzeugteil 2 geschlossen.

In Fig. 1 ist noch erkennbar, dass das Kraftfahrzeug 1 eine hoch gesetzte Bremsleuchte 23 aufweist. Die Steuereinrichtung 14 steht derart mit der Bremsleuchte 23 in Steuerverbindung, dass die Bremsleuchte 23 beim Auftreten des Betätigungssteuersignals eingeschaltet wird.
- 1.: Kraftfahrzeug
- 2: erstes Fahrzeugteil
- 3: zweites Fahrzeugteil
- 4: Ent-/Verriegelungseinrichtung
- 5: Zugangsberechtigungsmittel
- 6: Detektionseinrichtung
- 7: erster Sender
- 8: erstes elektromagnetisches Wechselfeld
- 9: erster Umgebungsbereich
- 10: erster Empfänger
- 11: zweiter Sender
- 12: zweites elektromagnetisches Wechselfeld
- 13: zweiter Empfänger
- 14: Steuereinrichtung
- 15: zweiter Umgebungsbereich
- 16: Stelleinrichtung
- 17: Betätigungseinrichtung
- 18: Näherungssensor
- 19: Sensoranordnung
- 20: Teil des Außenbereichs
- 21: Körperteil
- 22: Positionsgeber
- 23: hoch gesetzte Bremsleuchte

## Patentansprüche

1. Kraftfahrzeug (1) mit einem in eine Offen- und eine Schließstellung verstellbaren ersten Fahrzeugteil (2), insbesondere einer Heckklappe, und mindestens einem in eine Offen- und eine Schließstellung verstellbaren zweiten Fahrzeugteil (3), insbesondere einer Fahrzeugtüre, mit einer Betätigungseinrichtung (17) zum Verstellen des ersten Fahrzeugteils (2) in die Offen- und/oder Schließstellung, mit einer Ent-/Verriegelungseinrichtung (4) für die Fahrzeugteile (2, 3), mit einem Näherungssensor (18), der einen Teil eines Außenbereichs (20) des Kraftfahrzeugs (1) auf die Anwesenheit eines Körperteils (21) eines Benutzers überwacht, mit einem Zugangsberechtigungsmittel (5) und einer Detektionseinrichtung (6), mittels der das Vorhandensein des Zugangsberechtigungsmittels (5) berührungslos in einem ersten Umgebungsbereich (9) der Detektionseinrichtung und einem kleineren zweiten Umgebungsbereich (15) der Detektionseinrichtung (6) detektierbar ist, und mit einer mit dem Näherungssensor (18), der Detektionseinrichtung (6), der Betätigungseinrichtung (17) und der Ent-/Verriegelungseinrichtung (4) verbundenen Steuereinrichtung (14), die derart ausgestaltet ist,
- dass ein Freigabesignal für das Entriegeln der Ent-/Verriegelungseinrichtung erzeugt wird, wenn die Detektionseinrichtung (6) das Vorhandensein des Zugangsberechtigungsmittels (5) in dem ersten Umgebungsbereich (9) detektiert, und
- dass ein das Verstellen des ersten Fahrzeugsteils (2) auslösendes Betätigungssteuersignal erzeugt wird, wenn der Näherungssensor (18) die Anwesenheit des Körperteils (21) in dem Teil des Außenbereichs (20) und die Detektionseinrichtung (6) das Vorhandensein des Zugangsberechtigungsmittels (5) in dem kleineren zweiten Umgebungsbereich (15) detektieren,
**dadurch gekennzeichnet, dass** der Näherungssensor (18) Mittel zum Erkennen mindestens eines vorbestimmten Bewegungsablaufs oder Bewegungsprofils des Körperteils (21) und einen Speicher aufweist, dass die Detektionseinrichtung (6) eine Stelleinrichtung (16) zum Verändern der Größe des ersten Umgebungsbereichs (9) und/oder zweiten Umgebungsbereichs (15) hat, und dass die Mittel zum Erkennen des Bewegungsablaufs zum berührungslosen individuellen Einstellen der Größe des Umgebungsbereichs derart mit der Stelleinrichtung (16) in Steuerverbindung stehen, dass beim Detektieren des vorbestimmten Bewegungsablaufs oder Bewegungsprofils die Größe des ersten Umgebungsbereichs (9) und/oder zweiten Umgebungsbereichs (15) verändert wird.

2. Kraftfahrzeug (1) nach Anspruch 1, **dadurch gekennzeichnet, dass** die Detektionseinrichtung (6) einen Sender (7) zur Aussendung eines mit dem Zugangsberechtigungsmittel wechselwirkenden elektromagnetischen Wechselfelds (8) aufweist, dass die Sendeleistung des Senders (7) verstellbar ist, und dass der Sender (7) derart mit der Steuereinrichtung (14) in Steuerverbindung steht, dass während der Überprüfung des Vorhandenseins des Zugangsberechtigungsmittels (5) in dem zweiten Umgebungsbereich (15) die Sendeleistung geringer ist als während der Überprüfung des Vorhandenseins des Zugangsberechtigungsmittels (5) in dem ersten Umgebungsbereich (9).

3. Kraftfahrzeug (1) nach Anspruch 1 oder 2, **dadurch gekennzeichnet, dass** die Detektionseinrichtung (6) einen ersten Sender (7) zur Aussendung eines mit dem Zugangsberechtigungsmittet wechselwirkenden elektromagnetischen Wechselfelds (8) aufweist, dass das Zugangsberechtigungsmittel (5) eine Messeinrichtung zum Messen der Feldstärke des elektromagnetischen Wechselfelds (8) hat, dass das Zugangsberechtigungsmittel (5) einen zweiten Sender (11) aufweist, der derart ausgestaltet und mit der Messeinrichtung verbunden ist, dass von dem zweiten Sender (11) ein von der Feldstärke abhängiges Funksignal aussendbar ist, und dass die Detektionseinrichtung einen Empfänger (13) für dieses Funksignal aufweist.

4. Kraftfahrzeug (1) nach einem der Ansprüche 1 bis 3, **dadurch gekennzeichnet, dass** der Bewegungsablauf wenigstens eine Schwenkbewegung und/oder mindestens ein Abheben und/oder Senken des Körperteils (21) umfasst.

5. Kraftfahrzeug (1) nach einem der Ansprüche 1 bis 4, **dadurch gekennzeichnet, dass** es Mittel zum Überwachen der Schließstellung des ersten Fahrzeugteils (2) aufweist, und dass die Steuereinrichtung (14) derart mit diesen Mitteln und der Betätigungseinrichtung (17) in Steuerverbindung steht, dass das erste Fahrzeugteil (2) geöffnet wird, wenn es sich beim Auftreten des Betätigungssteuersignals in Schließstellung befindet, und dass das erste Fahrzeugteil (2) geschlossen wird, wenn es sich beim Auftreten des Betätigungssteuersignals nicht in Schließstellung befindet.

6. Kraftfahrzeug (1) nach einem der Ansprüche 1 bis 5, **dadurch gekennzeichnet, dass** der Näherungssensor (18) mehrere voneinander beabstandete Sensorelemente aufweist, mit denen jeweils das Körperteil (21) des Benutzers berührungslos detektierbar ist.

7. Kraftfahrzeug (1) nach einem der Ansprüche 1 bis 6, **dadurch gekennzeichnet, dass** die Steuereinrichtung (14) derart mit mindestens einer Signalleuchte des Kraftfahrzeugs, insbesondere einer oberhalb der Heckklappe angeordneten Bremsleuchte (23) in Steuerverbindung steht, dass die Signalleuchte beim Auftreten des Betätigungssteuersignals eingeschaltet wird.

8. Kraftfahrzeug nach einem der Ansprüche 1 bis 7, **dadurch gekennzeichnet, dass** die Steuereinrichtung (14) derart mit mindestens einer Signalleuchte des Kraftfahrzeugs, insbesondere einer oberhalb der Heckklappe angeordneten Bremsleuchte (23) in Steuerverbindung steht, dass die Signalleuchte eingeschaltet wird, wenn das Zugangsberechtigungsmittel (5) in dem zweiten Umgebungsbereich (15) detektiert wird.

9. Verfahren zum Erzeugen eines Betätigungssteuersignals für ein automatisch betätigbares, in eine Offen- und eine Schließstellung verstellbares Fahrzeugteil (2) eines Kraftfahrzeugs (1) und zum Erzeugen eines Freigabesignals für das Entriegeln einer Ent-/Verriegelungseinrichtung (4) des Kraftfahrzeugs (1), wobei ein Teil eines Außenbereichs (20) des Kraftfahrzeugs (1) auf die Anwesenheit eines Körperteils (21) eines Benutzers überwacht wird, wobei ein erster Umgebungsbereich (9) des Kraftfahrzeugs (1) und ein zweiter Umgebungsbereich (15) des Kraftfahrzeugs (1), der kleiner ist als der erste Umgebungsbereich (9), jeweils berührungslos auf die Anwesenheit eines Zugangsberechtigungsmittels (5) überwacht werden, wobei das Freigabesignal erzeugt wird, wenn das Vorhandensein des Zugangsberechtigungsmittels (5) in dem ersten Umgebungsbereich (9) detektiert wird, und wobei das Betätigungssteuersignal erzeugt wird, wenn die Anwesenheit des Körperteils (21) in dem Teil des Außenbereichs (20) des Kraftfahrzeugs (1) und Vorhandensein des Zugangsberechtigungsmittels (5) in dem zweiten Umgebungsbereich (15) detektiert werden, **dadurch gekennzeichnet, dass** ein Bewegungsprofil des Körperteils (21) detektiert und mit einem vorbestimmten Vergleichsprofil verglichen wird, und dass die Abmessungen des ersten Umgebungsbereichs (9) und/oder zweiten Umgebungsbereichs (15) zum berührungslosen individuellen Einstellen der Größe des Umgebungsbereichs verändert werden, wenn das Vorhandensein des Zugangsberechtigungsmittels (5) in dem zweiten Umgebungsbereich (15) detektiert wird und das Bewegungsprofil mit dem Vergleichsprofil übereinstimmt.

## Claims

1. Motor vehicle (1) consisting of a primary vehicle part adjustable into an open and a closed position (2), in particular a tailgate as well as at least one secondary vehicle part (3) adjustable into an open and a closed position, in particular a vehicle door with actuation device (17) for switching the primary vehicle part (2) into the open and/or closed position, with a release/locking assembly (4) for the vehicle parts (2, 3), with a proximity sensor (18) monitoring part of the outer area (20) of the vehicle (1) for the presence of a body part (21) of a user, with an access authorization device (5) and a detection device (6) which shall detect the presence of the access authorization device (5) without contact in a primary environment (9) of the detection device and in a smaller secondary environment (15) of the detection device (6), and with a control device (14) connected to the proximity sensor (18), the detection device (6), the actuating device (17) and the release/locking assembly (4), designed in such a way
- that a release signal shall be generated for unlocking the release/locking assembly when the detection device (6) will detect the presence of the access authorization device (5) in the primary environment (9), and
- that an actuation control signal triggering the switching of the primary vehicle part (2) shall be generated when the proximity sensor (18) will detect the presence of the body part (21) in the portion of the outer area (20) and the detection device (6) will detect the presence of the access authorization device (5) in the smaller secondary environment (15),
**characterized in that** the proximity sensor (18) shall comprise means for detecting at least one predetermined sequence or profile of movements of the body part (21) as well as a memory module, that the detection device (6) shall have an actuation device (16) for changing the size of the primary environment (9) and/or secondary environment (15), and that the means for detecting the movement sequence for non-contact individual setting of the environment shall be connected to the actuation device (16) in such a way that upon detecting a predetermined sequence or profile of movements, the size of the primary environment (9) and/or secondary environment (15) shall be changed.

2. Motor vehicle (1) according to Claim 1, **characterized in that** the detection device (6) shall have a transmitter (7) for emitting an electromagnetic alternating field (8) interacting with the access authorization device, that the transmission power of the transmitter (7) shall be variable, and that the transmitter (7) shall be connected to the control device (14) in such a way that upon verification of the presence access authorization device (5) in the secondary environment (15), the transmission power shall be lower than during verification of the presence of the access authorization device (5) in the primary environment (9).

3. Motor vehicle (1) according to Claims 1 or 2, **characterized in that** the detection device (6) shall have a primary transmitter (7) for emitting an electromagnetic alternating field (8) interacting with the access authorization device, that the access authorization device (5) shall have a measuring device for measuring the field strength of the electromagnetic alternating field (8), that the access authorization device (5) shall have a secondary transmitter (11) connected to the measuring device and designed in such a way that the secondary transmitter (11) shall emit radio signal dependent on the field strength, and that the detection device shall have a receiver (13) for this radio signal.

4. Motor vehicle (1) according to one of Claims 1 to 3, **characterized in that** the movement sequence shall comprise at least one swiveling movement and/or at least one lifting and/or lowering movement of the body part (21).

5. Motor vehicle (1) according to one of Claims 1 to 4, **characterized in that** it shall have a means for monitoring the closed position of the primary vehicle part (2), and that the control device (14) shall be connected to these devices and the actuator (17) in such a way that the primary vehicle part (2) shall open when it is in the closed position upon occurrence of the actuation control signal and that the primary vehicle part (2) shall be closed when it is not in the closed position upon occurrence of the actuation control signal.

6. Motor vehicle (1) according to one of Claims 1 to 5, **characterized in that** the proximity sensor (18) shall have multiple sensor elements within a certain distance of each other which shall be able to detect the body part (21) of a user without contact.

7. Motor vehicle (1) according to one of Claims 1 to 6, **characterized in that** the control device (14) shall have a control connection with at least one signal light of the vehicle, in particular a stop light (23) mounted above the tailgate, in such a way that the signal light shall be switched on upon occurrence of the actuation control signal.

8. Motor vehicle according to one of Claims 1 to 7, **characterized in that** the control device (14) shall have a control connection with at least one signal light of the vehicle, in particular a stop light (23) mounted above the tailgate, in such a way that the signal light shall be switched on when the access authorization device (5) will be detected within the secondary environment (15).

9. Method for generating an actuation control signal for an automatically operable, into an open and a closed position switchable vehicle part (2) of a motor vehicle (1) as well as for generating a release signal for unlocking a release/locking device (4) of the motor vehicle (1), whereas part of an outer area (20) of the motor vehicle (1) shall be monitored for the presence of a body part (21), whereas a first primary environment (9) of the motor vehicle (1) and a secondary environment (15) of the motor vehicle (1) which is smaller than the primary environment (9) shall be monitored without contact for the presence of an access authorization device (5) whereas the release signal shall be generated when the presence of the access authorization device (5) will be detected in the primary environment (9) and whereas the actuation control signal shall be generated when the presence of the body part (21) in the part of the outer area (20) of the motor vehicle (1) as well as the presence of the access authorization device (5) in the secondary environment (15) shall be detected, **characterized in that** a movement profile of the body part (21) shall be detected and be compared to a given reference profile, and that the dimensions of the primary environment (9) and/or secondary environment (15) for non-contact individual setting of the environment size shall be changed when the presence of the access authorization device (5) in the secondary environment (15) will be detected and the movement profile will match the reference profile.

## Revendications

1. - Véhicule automobile (1) avec une première partie de véhicule (2) déplaçable dans une position d'ouverture et une position de fermeture, surtout un hayon et au moins une deuxième partie de véhicule (3) déplaçable dans une position d'ouverture et une position de fermeture, surtout une porte de véhicule, avec un dispositif de commande (17) pour déplacer la première partie de véhicule (2) dans la position d'ouverture et/ou de fermeture, avec un dispositif de verrouillage/ de déverrouillage (4) pour les parties de véhicule (2, 3), avec un capteur de proximité (18) qui surveille une partie de la zone extérieure (20) du véhicule automobile (1) par rapport à la présence d'une partie du corps (21) d'un utilisateur, avec un moyen de droit d'accès (5) et un dispositif de détection (6) par lequel la présence du moyen de droit d'accès (5) peut être détectée sans contact dans une première zone d'environnement (9) du dispositif de détection et dans une deuxième zone d'environnement plus petite (15) du dispositif de détection (6) et avec une installation de commande (14) reliée au capteur de proximité (18), au dispositif de détection (6), au dispositif de commande (17) et au dispositif de verrouillage/ de déverrouillage (4), réalisée de telle manière
- qu'un signal d'autorisation pour le déverrouillage du dispositif de verrouillage/ de déverrouillage soit généré lorsque le dispositif de détection (6) détecte la présence du moyen de droit d'accès (5) dans la première zone d'environnement (9) et
- qu'un signal de commande qui déclenche le déplacement de la première partie du véhicule (2) soit généré lorsque le capteur de proximité (18) détecte la présence d'une partie du corps (21) dans la partie de la zone extérieure (20) et le dispositif de détection (6) détecte la présence du moyen de droit d'accès (5) dans la deuxième zone d'environnement plus petite (15),
**caractérisé en ce**
**que** le capteur de proximité (18) présente des moyens pour reconnaître au moins un déroulement séquentiel des mouvements prédéterminé ou un profil de mouvements prédéterminé de la partie du corps (21) et une mémoire, que le dispositif de détection (6) possède un système de réglage (16) pour modifier la dimension de la première zone d'environnement (9) et/ou deuxième zone d'environnement (15) et que les moyens pour reconnaître le déroulement séquentiel des mouvements sont reliés avec le système de réglage (16) en relation de commande pour le réglage individuel sans contact de la dimension de la zone d'environnement de telle manière que la dimension de la première zone d'environnement (9) et/ou deuxième zone d'environnement (15) soit modifiée lors de la détection du déroulement séquentiel des mouvements prédéterminé ou du profil de mouvements prédéterminé.

2. - Véhicule automobile (1) selon la revendication 1, **caractérisé en ce que** le dispositif de détection (6) présente un émetteur (7) pour émettre un champ alternatif électromagnétique (8) en interaction avec le moyen de droit d'accès, que la puissance d'émission de l'émetteur (7) est réglable et que l'émetteur (7) est en relation de commande avec l'installation de commande (14) de telle manière que pendant la vérification de la présence du moyen de droit d'accès (5) dans la deuxième zone d'environnement (15) la puissance d'émission soit inférieure que pendant la vérification de la présence du moyen de droit d'accès (5) dans la première zone d'environnement (9).

3. - Véhicule automobile (1) selon la revendication 1 ou 2, **caractérisé en ce que** le dispositif de détection (6) présente un premier émetteur (7) pour émettre un champ alternatif électromagnétique (8) en interaction avec le moyen de droit d'accès, que le moyen de droit d'accès (5) possède une installation de mesure pour mesurer l'intensité de champ du champ alternatif électromagnétique (8), que le moyen de droit d'accès (5) présente un deuxième émetteur (11) qui est réalisé et relié avec l'installation de mesure de telle manière qu'un signal radioélectrique dépendant de l'intensité de champ puisse être émis par le deuxième émetteur (11) et que le dispositif de détection présente un récepteur (13) pour ce signal radioélectrique.

4. - Véhicule automobile (1) selon l'une des revendications 1 à 3, **caractérisé en ce que** le déroulement séquentiel des mouvements comprend au moins un mouvement pivotant et/ou au moins le levage et/ou l'abaissement de la partie du corps (21).

5. - Véhicule automobile (1) selon l'une des revendications 1 à 4, **caractérisé en ce qu'**il présente des moyens pour surveiller la position de fermeture de la première partie du véhicule (2) et que l'installation de commande (14) est en relation de commande avec ces moyens et avec le dispositif de commande (17) de telle manière que la première partie du véhicule (2) soit ouverte lorsqu'elle se trouve en position de fermeture lors de l'apparition du signal de commande et que la première partie du véhicule (2) soit fermée lorsqu'elle ne se trouve pas en position de fermeture lors de l'apparition du signal de commande.

6. - Véhicule automobile (1) selon l'une des revendications 1 à 5, **caractérisé en ce que** le capteur de proximité (18) présente plusieurs éléments de capteur distants l'un de l'autre avec lesquels la partie du corps (21) de l'utilisateur est détectable sans contact.

7. - Véhicule automobile (1) selon l'une des revendications 1 à 6, **caractérisé en ce que** l'installation de commande (14) est en relation de commande avec au moins un feu de signalisation du véhicule automobile, surtout un feu stop (23) monté au-dessus du hayon, de telle manière que le feu de signalisation soit allumé lors de la présence d'un signal de commande.

8. - Véhicule automobile (1) selon l'une des revendications 1 à 7, **caractérisé en ce que** l'installation de commande (14) est en relation de commande avec au moins un feu de signalisation du véhicule automobile, surtout un feu stop (23) monté au-dessus du hayon, de telle manière que le feu de signalisation soit allumé lorsque le moyen de droit d'accès (5) est détecté dans la deuxième zone d'environnement.

9. - Procédé pour générer un signal de commande pour une partie de véhicule (2) d'un véhicule automobile (1) à commande automatique, déplaçable dans une position d'ouverture et une position de fermeture et pour générer un signal d'autorisation pour le déverrouillage du dispositif de verrouillage/ de déverrouillage (4) du véhicule automobile (1), une partie de la zone extérieure (20) du véhicule automobile (1) étant surveillée par rapport à la présence d'une partie du corps (21) d'un utilisateur, une première zone d'environnement (9) du véhicule automobile (1) et une deuxième zone d'environnement (15) du véhicule automobile (1) qui est plus petite que la première zone d'environnement (9) étant surveillées sans contact par rapport à la présence d'un moyen de droit d'accès (5), le signal d'autorisation étant généré lorsque la présence du moyen de droit d'accès (5) est détectée dans la première zone d'environnement (9) et le signal de commande étant généré lorsque la présence de la partie du corps (21) est détectée dans la partie extérieure (20) du véhicule automobile (1) et la présence du moyen de droit d'accès (5) est détectée dans la deuxième zone d'environnement (15),
**caractérisé en ce qu'**un profil de mouvements de la partie du corps (21) est détecté et comparé à un profil de comparaison prédéterminé et que les dimensions de la première zone d'environnement (9) et/ou deuxième zone d'environnement (15) pour l'ajustement individuel sans contact de la dimension de la zone d'environnement sont modifiées lorsque la présence du moyen de droit d'accès (5) est détectée dans la deuxième zone d'environnement (15) et le profil de mouvements correspond au profil de comparaison.
